# EUROPEAN PATENT SPECIFICATION

(11) **EP 4 336 993 B1**
(45) Date of publication and mention of the grant of the patent: **18.02.2026**
(21) Application number: 22709408.3
(22) Date of filing: 04.03.2022
(51) Int. Cl.: A01B 76/00, B60Q 1/26

(54) **MACHINE FOR AGRICULTURAL OPERATIONS WITH INTEGRATED COMMUNICATION AND LIGHTING SYSTEM**
MASCHINE FÜR LANDWIRTSCHAFTLICHE ARBEITEN MIT INTEGRIERTEM KOMMUNIKATIONS- UND BELEUCHTUNGSSYSTEM
MACHINE POUR TRAVAUX AGRICOLES AVEC SYSTÈME INTÉGRÉ DE COMMUNICATION ET D'ÉCLAIRAGE

(30) Priority: 10.05.2021 US 202163186307 P
(43) Date of publication of application: 20.03.2024
(73) Proprietor: Precision Planting LLC, Tremont, IL 61568 (US)
(72) Inventor: ALLGAIER, Ryan, Tremont, Illinois 61568 (US); TRAVIS, Dexter, Tremont, Illinois 61568 (US)
(74) Representative: AGCO Intellectual Property Department
(86) International application number: PCT/IB2022/051929
(87) International publication number: WO 2022/238766

(56) References cited:
- EP-A1- 3 219 184
- EP-A1- 3 440 523
- EP-A1- 3 572 285
- EP-A1- 3 900 983
- EP-B1- 3 440 523
- WO-A1-2018/179777
- JP-A- 2020 123 402
- US-A1- 2017 282 784

## Description

### CROSS REFERENCE TO RELATED APPLICATIONS

This application claims priority to U.S. Provisional Application No. 63/186,307, filed on 10 May 2021.

### BACKGROUND

EP 3 572 285 A1 discloses an agricultural vehicle with a communication module to wirelessly communicate with another vehicle to exchange various kinds of information with each other. The communication module includes three communication antennas that have different frequency bands, and a communication information processing apparatus. The first communication antenna has the highest frequency band to communicate image information, for example. The second communication antenna has the second highest frequency band to communicate in-vehicle information other than image information, such as vehicle speed. The third communication antenna has the lowest frequency band to communicate various kinds of information such as an instruction to start or stop work travel.

EP 3 219 184 A1 relates to a host computer connectable to an operation terminal and an agricultural work vehicle of another user via a communication circuit so as to obtain work state, vehicle information, work machine information, farm product information and the like from the other fields. The communication circuit is configured to transmit and receive information mutually via a public telephone network (including mobile communication such as cellular phones) and internet.

WO 2017/176647 A1 discloses an autonomous agricultural vehicle with a status indicator configured to indicate the operating state to workers proximate to the vehicle. The status indicator may indicate that operation of the agricultural system may be initiated. The status indicator may have a multicolor lighting assembly configured to indicate various operating states of the agricultural vehicle.

When performing operations in an agricultural field, there may be times when multiple agricultural implements could be used to perform operations in a field. To coordinate the operation of implements so that one implement does not perform the same operations on a field where another implement already performed operations, as applied data collected by a monitor in a first machine that pulls the first agricultural implement needs to be transferred to a monitor in a second machine that pulls the second agricultural implement. To transfer as applied data collected by a first monitor, the data needs to be extracted to external third party software at a remote location from the first monitor to convert the as applied data into prescriptions and boundaries, which converts the data from an original file into a separate file. The separate file is then imported as a prescription file from the remote location into the second monitor. As the second monitor of the second machine traverses a field, this second monitor can request data from the remote location (cloud location) to fill in an area with planting data that the second machine has not reached.

Another approach includes a live planter to planter communication of the planting data. However, when the planters are out of range of each other, communication will not occur. Gaps in data persist until the first and second planters are in communication range of each other and are concurrently within the gap.

### BRIEF DESCRIPTION OF THE DRAWINGS

The present disclosure is illustrated by way of example, and not by way of limitation, in the figures of the accompanying drawings and in which:
Figure 1 shows an example of a system for performing agricultural operations of agricultural fields.
Figure 2 illustrates one embodiment of an integrated communication and lighting system 200 (e.g., wireless node 200) for communications being transmitted to and received from a network.
Figure 3 illustrates one embodiment of an integrated communication and lighting system 300 for communications being transmitted to and received from a network.
Figure 4 shows a side view of a machine 400 (e.g., tractor, combine harvester, etc.) having a cab with a communication and lighting system in accordance with one embodiment.
Figure 5 shows a rear view of a machine 500 (e.g., tractor, combine harvester, etc.) having a cab with a communication and lighting system in accordance with one embodiment.
Figures 6A and 6B illustrate a flow diagram of one embodiment for a method of data transfer between wireless nodes of a wireless network topology.
Figure 7 illustrates an antenna radiation pattern for communications of a wireless node in accordance with one embodiment.
Figure 8 illustrates a diagram of bandwidth and communication range for a dual frequency radio of a wireless node in accordance with one embodiment.
Figure 9 illustrates a flow diagram of one embodiment for a computer implemented method for operating wireless nodes of a wireless network topology.
Figure 10 shows an example of a system 1200 that includes a machine 1202 (e.g., tractor, combine harvester, etc.) with a wireless node and an implement 1240 (e.g., planter, sidedress bar, cultivator, plough, sprayer, spreader, irrigation implement, etc.) in accordance with one embodiment.

### BRIEF SUMMARY

Described herein are communication and lighting systems that are positioned in an elevated position above a cab for agricultural operations. In one embodiment, a communication and lighting system is positioned in an elevated position above the cab. The communication and lighting system includes antenna elements and a dual frequency radio to transmit and receive communications.

### DETAILED DESCRIPTION

Described herein is an integrated communication and lighting system (e.g., wireless node) that is positioned above a cab for agricultural operations. The wireless node can communicate agricultural data to other wireless nodes that positioned on a different machine or the node can be a stand alone node in a field to form a wireless network topology across various regions of a field. It will be apparent, however, to one skilled in the art, that embodiments of the present disclosure may be practiced without these specific details. In some instances, well-known structures and devices are shown in block diagram form, rather than in detail, in order to avoid obscuring the present disclosure.

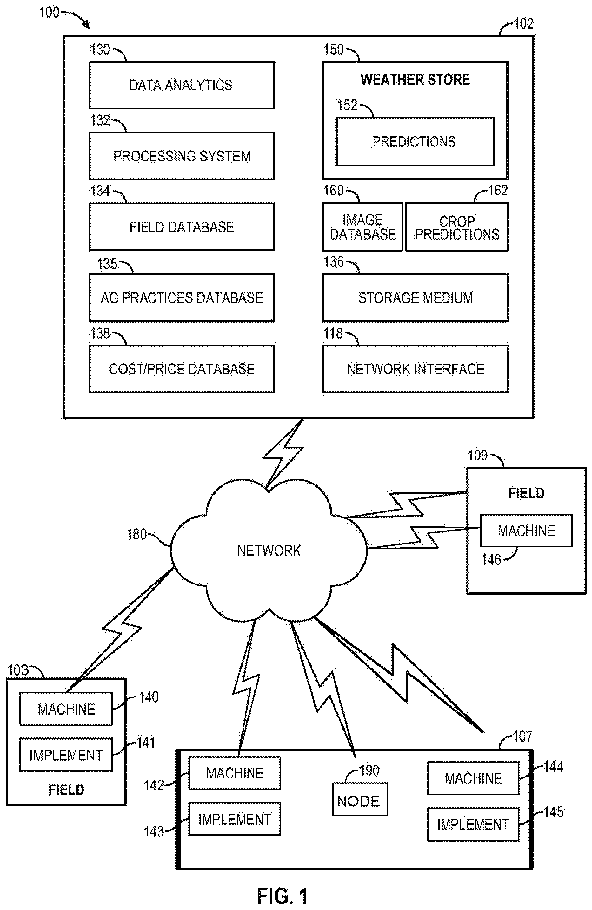

Referring to the drawings, wherein like reference numerals designate identical or corresponding parts throughout the several views, Figure 1 shows an example of a system 100 for performing agricultural operations (e.g., planting seed in a field, applying fluid applications to plants) of agricultural fields including operations of an implement having application units. For example, the system 100 may be implemented as a cloud based system with servers, data processing devices, computers, etc. Aspects, features, and functionality of the system 100 can be implemented in servers, wireless nodes, planters, planter monitors, sprayers, sidedress bars, combines, laptops, tablets, computer terminals, client devices, user devices, handheld computers, personal digital assistants, cellular telephones, cameras, smart phones, mobile phones, computing devices, or a combination of any of these or other data processing devices.

The system 100 can include a network computer or an embedded processing device within another device (e.g., display device) or within a machine (e.g., planter, combine), or other types of data processing systems having fewer components or perhaps more components than that shown in Figure 1. The system 100 (e.g., cloud based system) and agricultural operations can control and monitor planting and fluid applications using an implement or machine. The system 100 includes machines 140, 142, 144, 146 and implements 141, 143, 145 coupled to a respective machine 140, 142, 144, 146. The implements (e.g., planter, cultivator, plough, sprayer, spreader, irrigation implement) can include flow devices for controlling and monitoring applications (e.g., seeding, spraying, fertilization) of crops and soil within associated fields (e.g., fields 103, 107, 109). The system 100 includes an agricultural analysis system 102 that can include a weather store 150 with current and historical weather data, weather predictions module 152 with weather predictions for different regions, and at least one processing system 132 for executing instructions for controlling and monitoring different operations (e.g., fluid applications). The storage medium 136 may store instructions, software, software programs, etc for execution by the processing system and for performing operations of the agricultural analysis system 102. In one example, storage medium 136 may contain a fluid application prescription (e.g., fluid application prescription that relates georeferenced positions in the field to application rates). The implement 141 (or any of the implements) may include an implement with a pump, flow sensors and/or flow controllers that may be specifically the elements that are in communication with the network 180 for sending control signals or receiving as-applied data. The network 180 (e.g., any wireless network, any cellular network (e.g., 4G, 5G), Internet, wide area network, WiMax, satellite, IP network, etc.) allows the system 102, wireless nodes, machines, and implements of FIG. 1 to communicate between each other when the system 102, wireless nodes, machines (e.g., 140, 142, 144, 146), or implements (e.g., 141, 143, 145) are connected to the network 180. Examples of agricultural monitors are described in PCT Publication Nos. WO2008/086318, WO2012/129442, WO2013/049198, WO2014/026183, and WO2014/018717. An example of an agricultural monitor is the 20|20^{®} monitor from Precision Planting, LLC. In one example, a monitor preferably includes a graphical user interface ("GUI"), a memory, a central processing unit ("CPU"), and a bus node. The bus node preferably comprises a controller area network ("CAN") node including a CAN transceiver, a controller, and a processor. The monitor is preferably in electrical communication with a speed sensor (e.g., a radar speed sensor mounted to a tractor) and a global positioning receiver ("GPS") receiver mounted to the tractor (or in some embodiments to a toolbar of an implement).

As an agricultural implement traverses a field, a monitor A of a first machine (e.g., 140, 142, 144, 146) collects as applied data at various points in the field. The first machine may be coupled to the agricultural implement and causing the agricultural implement to traverse the field. The as applied data can be seeding information, such as percent singulation, skips, multiples, downforce, applied fluids, depth measurements, agronomic measurements, and anything else that is collected.

As, the as applied data is collected and stored in a monitor data file of the monitor A, field boundary and prescriptions are embedded into the data file.

File transfer from monitor A of the first machine to monitor B of a second machine can be accomplished through any data exchange, such as saving the file to a USB stick, via cloud exchange, or by direct vehicle to vehicle communications network. In one example, the first machine and the second machine are communicatively coupled to the network 180 and one or more files are transferred from the monitor A to the monitor B via the network 180.

Data recorded by monitor A at one location can be used to influence control of monitor B in other locations. For instance, when seeds are dropped, spatial data indicates that seeds have been applied (or covered) in that area. That coverage information can then be used by monitor B as the equipment traverses the field to instruct the control modules when to turn on or off. This information is used to automatically control the equipment. Many data channels exist that are mapped spatially to be viewed by the operator. In many cases, this data is not used by the monitor to automatically control itself while the equipment traverses the field. However, the operator is influenced by this information, and the operator may choose to operate the equipment in a different way based on data from previous field passes and his present location in the field. Sharing data between equipment can either influence the automatic control of the equipment, or it influences the operator, who then controls the equipment differently.

The present application discloses a wireless network topology, a radio technology, and a communication system that is positioned above a tractor cab and integrated with a lighting system to improve the data sharing process between machines and wireless nodes to improve agricultural operations.

In one example, the machine 142 is pulling an implement 143 through a field 107 to perform an agricultural operation. In a similar manner, the machine 144 is pulling an implement 145 through the field 107 to perform the same agricultural operation. The machines 142 and 144 have bi-directional communications for the data sharing process for the agricultural operation. If the machines 142 and 144 are located in different physically distant regions then these machines may not be able to directly communication with each other in real time as the agricultural operation is being performed in the field. A wireless node 190 can be positioned in an interior region (e.g., midpoint location) within the field 107 in order to be able to communicate with both machines 142 and 144. The wireless node 190 can be powered with any available energy source such as a battery, solar panel, wind energy source, or power from a utility pole. Agricultural data from the machines 142 and 144 can be shared with the wireless node 190 when these machines having wireless nodes are within a communication range of the wireless node 190 and the agricultural data is temporarily stored with this wireless node 190, which can then share agricultural data from machine 142 with machine 144 and also share agricultural data from machine 144 with machine 142 when the wireless node 190 and machines are within communication range of each other.

Data for field coverage may need to be shared between machines to indicate whether a product has been applied or not. Thus, if a first machine plants or harvests in a first region, then a second machine will know not to plant or harvest in the first region. The second machine can receive the seed coverage planting data from the first machine and additional related parameters such as population data, singulation data for the planting, and performance metrics from the first machine.

In another example, machines 142 and 144 are located in different but possibly adjacent fields. The wireless nodes of these machines 142 and 144 are not able to directly communicate with each other during certain time periods. The wireless node 190 is able to directly communication with machines 142 and 144 and can share data between the machines as agricultural operations occur.

In another example, a combine harvester is harvesting rows of a crop in a field. For a partial row harvest (e.g., 4 rows have been harvested by a first machine and 4 rows have not been harvested for an 8 row harvester of a second machine), an agricultural application will attribute the yield data for the second machine to the 4 rows that have not yet been harvested instead of attributing the yield data to all 8 rows.

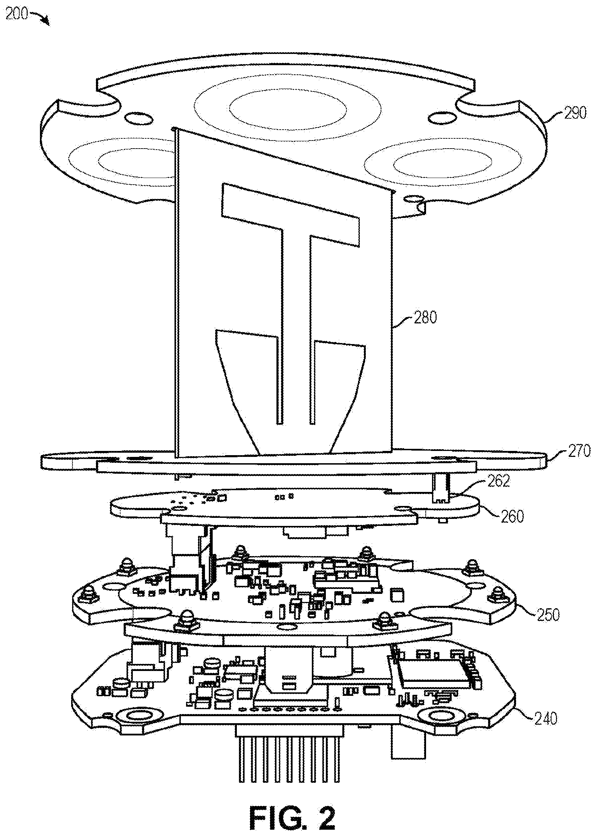

Figure 2 illustrates one embodiment of an integrated communication and lighting system 200 (e.g., wireless node 200) of a machine for RF communications being transmitted to and received from a network or another machine. The system 200 may include processing logic that may comprise hardware (circuitry, dedicated logic, etc.), software (such as is run on a general purpose computer system or a dedicated machine or a device), or a combination of both. In one embodiment, the integrated communication and lighting system 200 (wireless node 200) includes antenna elements 290, 280, 270, RF circuitry 260, lighting circuitry 250, and processing circuitry 240. In one example, the antenna element 290 is a passive waveguide element, the antenna element 280 is an active antenna element that receives RF signals from the RF circuitry 260, and the antenna element 270 is a ground plane antenna. The RF circuitry 260 can include RF integrated circuits (ICs) for converting bits to RF signals, amplifier circuitry for amplifying RF signals, and control logic to share the antenna elements for dual band radio frequency (e.g., 2.4 GHz frequency band, 900 MHz frequency band). The lighting circuitry 250 includes power conditioning circuitry and lighting elements (e.g., light-emitting diodes). The lighting elements emit light to indicate one or more states (e.g., warning state or condition to indicate that the machine is moving, a communication state to indicate that the RF circuitry and antenna elements are transmitting or receiving communications, other machine states). In one example, the lighting elements emit light in a rotating pattern to indicate the warning state. The lighting elements can pause or delay the rotating pattern to indicate the communication state from the machine to a different node.

The processing circuitry 240 includes one or more processors (e.g., microprocessors), memory, and a storage device. If the communication system is not sending or receiving communications, then the processing circuitry 240 can be disabled for a low power mode. The lighting circuitry can be used for lighting while the communication system is not sending or receiving communications.

In one example, a connector 262 (e.g., MMCX connector) connects a printed circuit board (PCB) of the antenna element 270 to a PCB of the RF circuitry 260. The antenna element 270 is surface mount and RF circuitry 260 is through-hole.

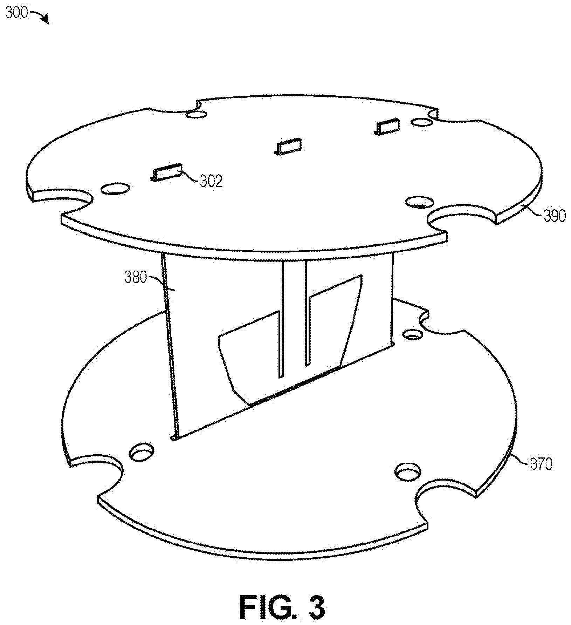

Figure 3 illustrates one embodiment of an integrated communication and lighting system 300 for communications being transmitted to and received from a network. The components of system 300 are a subset of the components of the system 200. PCB of the antenna element 390 includes tabs 302 to locate and retain the PCB of antenna element 380 within slots that are present on both of the PCBs for antenna elements 390 and 370.

The systems 200 and 300 include a housing or box to form a protective enclosure that can be positioned above a tractor cab. In one example, the communication and lighting system is mounted or attached above a tractor cab. The antenna elements 390 and 370 are separated by antenna element 380. The antennas (e.g., 900MHz, 2.4GHz, cellular antennas) can be shaped in numerous different types of antenna structures and also have different orientations to maximize signal transmission and reception for a particular wireless network. The antenna structure includes at least one antenna (e.g., 1 antenna, 2 antennas, 3 antennas, ..., many antennas). Additional antennas will increase bandwidth for the transmission and receiving of communications.

The RF circuitry 260 of Figure 2 receives RF signals or RF communications from the antennas and converts into signals that are then transmitted to a connection to plug into a cable (e.g., RJ45, USB, Cat 5, USB 2.0 (480 mbit/sec), USB 3.0 (~5000 mbit/sec), Gigabit ethernet (1000 mbit/sec), etc.) that connects to electronic components within the cab of the tractor.

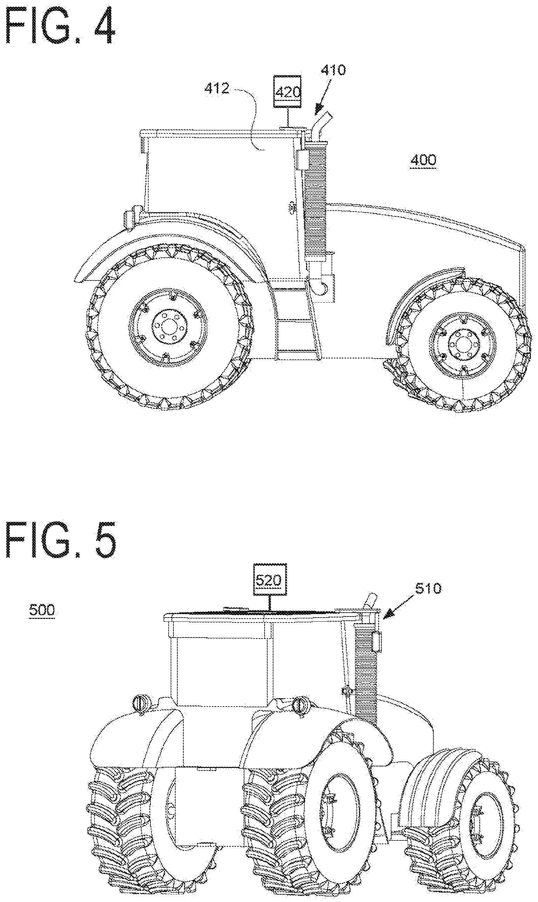

Figure 4 shows a side view of a machine 400 (e.g., tractor, combine harvester, etc.) having a cab with a communication and lighting system in accordance with one embodiment. The machine 400 includes a cab 410 having multiple windows including a window 412. A communication system 420 (e.g., communication and lighting system 200, 300) is positioned in an elevated position above the cab to improve transmission and reception of wireless communications being sent to and received from a network 180 and to also position the lighting at a highest distance from a ground surface. A higher offset from the ground surface helps to account for a rolling terrain. The elevated position can be a minimum distance above the cab for optimal transmission and reception of wireless communications. A connection on the communication and lighting system can plug into a cable (e.g., RJ45, USB, Cat 5, PoE, etc.). The communication and lighting system 420 can be attached with a flexible attachment to the roof of the cab to avoid shearing off the communication and lighting system from a road overpass, shed, or other obstruction.

Figure 5 shows a rear view of a machine 500 (e.g., tractor, combine harvester, etc.) having a cab with a communication and lighting system in accordance with one embodiment. The machine 500 includes a cab 510. A communication and lighting system 520 (e.g., communication and lighting system 200, 300) is positioned in an elevated position above the cab 510 to improve transmission and reception of wireless communications being sent to and received from a network 180. A connection on the communication system can plug into a cable (e.g., RJ45, USB, Cat 5, PoE, etc.).

The communication and lighting system of the present application functions as a wireless network node of a network topology (e.g., tree, partial mesh, or hybrid network topology). Each node can perform data replication to other neighboring nodes or any nodes within a communication range of a transmitting node. A node can be a standalone node in a field or a node can be located in the cloud (e.g., a cloud server). Agricultural field data is reduced to individual records with each record indicating a single sampling interval (e.g., 1-10 Hz). Records can be combined into a manifest or data record summary that is partially or fully shared with other nodes. The data exists at rest due to being temporarily or permanently stored in a node and not just in transit. The manifest can include data records for different applications in a field during different seasons over a time period of numerous years. A manifest can be a file containing metadata for a group of accompanying files that are part of a set or coherent unit. In some embodiment, a manifest could be a farmer's operation (all farms and fields), the passes, seasons, and tasks performed on a field, or the passes, seasons, and tasks performed by a particular machine. A manifest may describe historic data, active data, and future data.

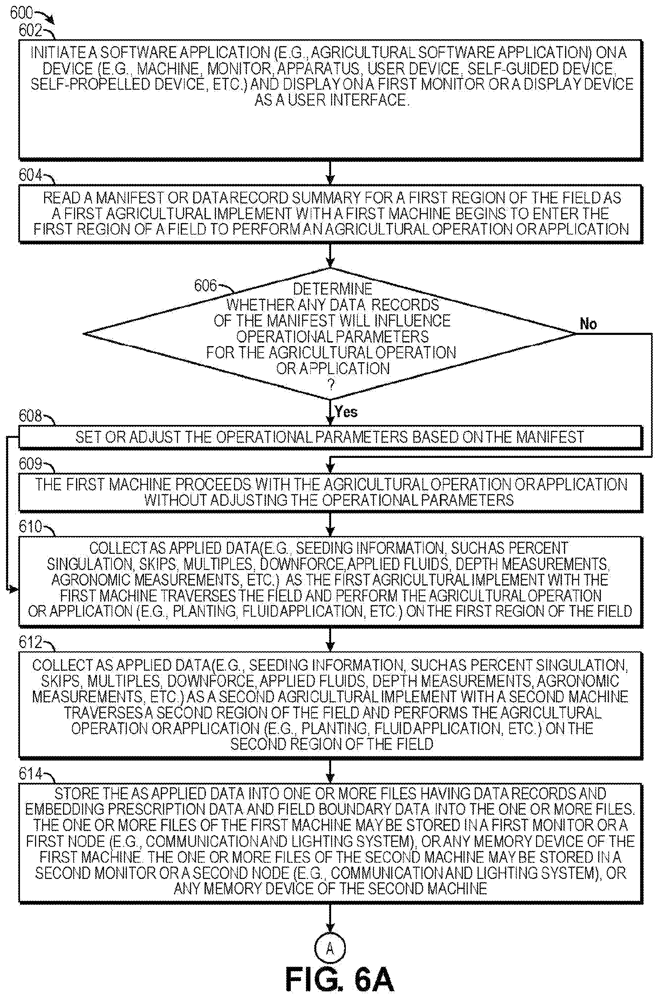

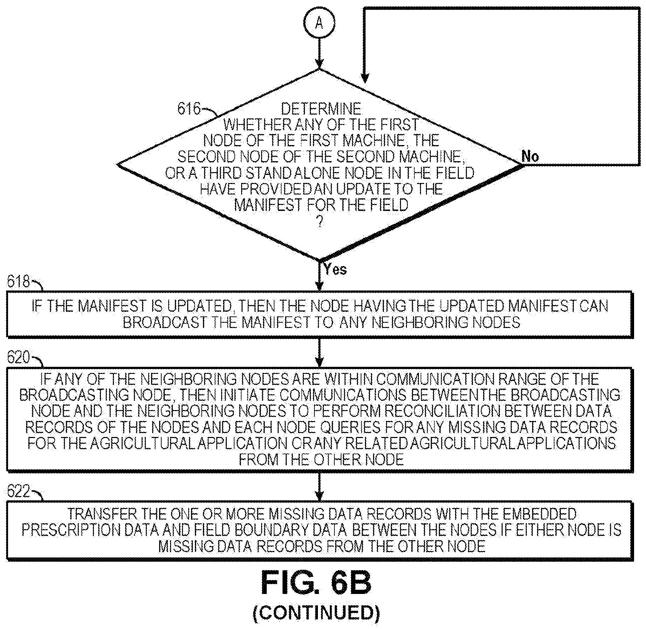

Figures 6A and 6B illustrate a flow diagram of one embodiment for a computer implemented method of data transfer between wireless nodes of a wireless network topology. The wireless nodes can be part of a machine (e.g., tractor, combine harvester, etc.), an implement, a stand alone node, or a cloud node. The method is performed by processing logic that may comprise hardware (circuitry, dedicated logic, etc.), software (such as is run on a general purpose computer system or a dedicated machine or a device), or a combination of both. In one embodiment, the method is performed by processing logic of a wireless node (e.g., node of a machine, cloud node, stand alone node, etc.), a device (e.g., monitor device, display device, user device, self-guided device, self-propelled device, etc.), or both the node and the device. The node and/or device executes instructions of a software application or program with processing logic. The software application or program can be initiated by the device and/or node. In one example, a monitor or display device receives user input and provides a customized display for operations of the method.

At operation 602, a software application (e.g., agricultural software application) is initiated on a device (e.g., machine, monitor, apparatus, user device, self-guided device, self-propelled device, etc.) and displayed on a first monitor or a display device as a user interface. The device may be integrated with or coupled to a first machine and a first agricultural implement that traverses a field during an application pass. In one example, the software application is initiated on a first monitor of a first machine as a first implement traverses a field.

At operation 604, the method includes reading a manifest or data record summary for a field as a first agricultural implement with a first machine begins to enter the first region of a field to perform an agricultural operation or application. The manifest can be provided by a different node or stored locally with the first machine. At operation 606, the method includes determining whether any data records of the manifest will influence operational parameters for the agricultural operation or application. If so, then the method includes setting or adjusting the operational parameters based on the manifest at operation 608. If not, then the first machine proceeds with the agricultural operation or application without adjusting the operational parameters at operation 609.

At operation 610, the method includes collecting as applied data (e.g., seeding information, such as percent singulation, skips, multiples, downforce, applied fluids, depth measurements, agronomic measurements, etc.) as the first agricultural implement with the first machine traverses the field and performs the agricultural operation or application (e.g., planting, fluid application, etc.) on the first region of the field. At operation 612, the method includes collecting as applied data (e.g., seeding information, such as percent singulation, skips, multiples, downforce, applied fluids, depth measurements, agronomic measurements, etc.) as a second agricultural implement with a second machine traverses a second region of the field and performs the agricultural operation or application (e.g., planting, fluid application, etc.) on the second region of the field.

At operation 614, the method includes storing the as applied data into one or more files having data records and embedding prescription data and field boundary data into the one or more files. The one or more files of the first machine may be stored in a first monitor or a first node (e.g., communication and lighting system), or any memory device of the first machine. The one or more files of the second machine may be stored in a second monitor or a second node (e.g., communication and lighting system), or any memory device of the second machine. The new files of the first and second machines can update the manifest for the field. In one example, the prescription data and field boundary data are embedded directly into the one or more files without a complicated data conversion using third party software tools.

At operation 616, the method further includes determining whether any of the first node of the first machine, the second node of the second machine, or a third stand alone node in the field have provided an update to the manifest for the field.

If the manifest is updated, then the node having the updated manifest can broadcast the manifest to any neighboring nodes at operation 618. If the manifest is not updated, then the method returns to operation 616. In one example, a neighboring node is any node within communication range of the broadcasting node. The antenna elements of each node may include multiple frequency bands (e.g., 2.4 GHz frequency band, 900 MHz frequency band, cellular frequency bands for 3G, 4G, 5G, etc.) for transferring the one or more files for the updated manifest between any of the nodes.

At operation 620, if any the neighboring nodes are within communication range of the broadcasting node, then the method further includes initiating communications between the broadcasting node and the neighboring nodes to perform reconciliation between data records of the nodes and each node queries for any missing data records for the agricultural application or any related agricultural applications from the other node. At operation 622, the method includes transferring the one or more missing data records with the embedded prescription data and field boundary data between the nodes if either node is missing data records from the other node. The first node, second node, or third node can be communicatively coupled to each other via a network (e.g., network 180, a local machine-to-machine network, etc.).

The agricultural operation or application (e.g., the same agricultural operation or application of the first implement) can be performed with the second agricultural implement on the second region of the field even if the second node is missing data records from the first node for the agricultural operation or application. If new data records become available for any of the first, second, and third nodes then these data records will be transmitted with a highest priority when any of these first, second, and third nodes are within communication range of each other.

The as applied data files from the first monitor will be able to provide prescriptions, boundaries, and coverage data directly to the second monitor and thus influence control and operation of the application pass that is being performed with the second machine and the second implement. Data from the second monitor will be viewable alongside the first monitor's data (e.g., maps, summaries, etc.). This data transfer feature permits direct control and sharing, eliminates the complexity of data conversion with third party software tools, and permits agricultural control and operations to be performed and viewed with a display device of the monitors (e.g., in-cab displays). The transferred files can provide various types of agricultural data including guidance lines and controlling force-type prescriptions (e.g., down force, row cleaner, closing, etc.).

The files or data records to be shared between nodes can be divided into multiple priority classes. In one example, high priority data includes, but is not limited to data indicating what parts of a field (e.g., equipment location (latitude, longitude)), have already been covered with a product (e.g., seeds, liquids, granular products, etc.)

Data is characterized as being high priority if the data affects the way other machines or vehicles perform their product application. Additional high-priority data may be environmental data (e.g., organic matter data) about a field. In one example, a tillage tool performs a first application pass and measures environmental data like organic matter data. At a later time, a side dress tool performs a second application pass and the organic matter data influences operational parameters for the second application pass. A ratio of fertilizer in different regions of the field can be adjusted based on the organic matter data from the first application pass.

Data is characterized as being normal priority data if the data does not affect the way other machines or vehicles perform their product application. The normal priority data includes but is not limited to agronomic data like seed population, liquid application rates, and vehicle speeds. This category of data informs the user about behaviors from other vehicles, but do not cause product application behaviors to change in an automatic fashion.

In one example, a field includes a first wireless node that is associated with a first machine and implement, a second wireless node that is associated with a second machine and implement, a third wireless node between first and second regions of the field and a fourth wireless node between second and third regions of the field. The first and second machines may be located in different region of the field and may not be able to directly communicate with each other during an application pass. However, the first machine can communicate new data or an update to a manifest to the third wireless node and the second machine can communicate new data or an update to a manifest to the fourth wireless node. The third and fourth wireless nodes can communicate new data or updates to the manifest to each other and then share the new data or updates to the manifest with either of the first and second wireless nodes. For example, the third wireless node can receive new data from the fourth wireless node, which has received the new data from the second wireless node. The first wireless node receives the new data from the third wireless node and this new data may influence operational parameters for the application pass of the first machine and implement.

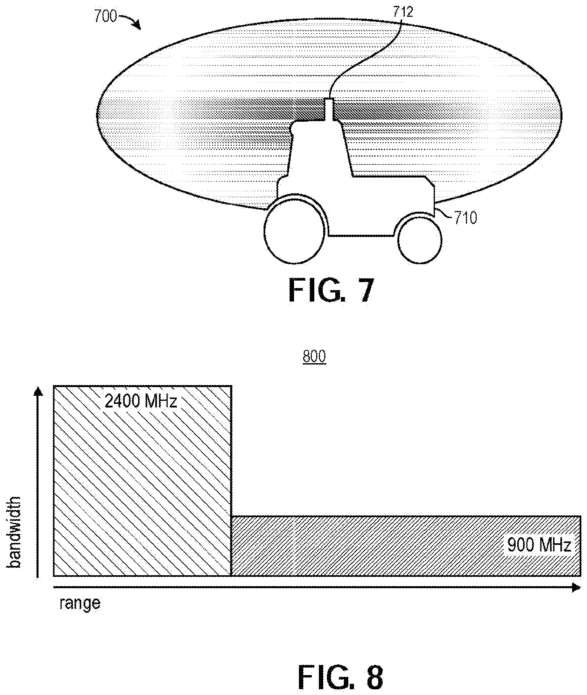

Figure 7 illustrates an antenna radiation pattern for communications of a wireless node of a machine in accordance with one embodiment. The machine 710 includes a wireless node 712 (e.g., communication and lighting system 200, 300) having an antenna design to generate the antenna radiation pattern 700. The radiation pattern of the antenna design is optimized for machine to machine communications in a horizontal direction in plane with each other accounting for a nominal amount of tilt. In one example, the antenna is designed with a radiation pattern of plus/minus 15 degree offset from a horizontal axis to maximize a range of sending communications in a horizontal direction and minimize or avoid sending RF energy to the moon or into the ground.

Figure 8 illustrates a diagram 800 of bandwidth versus range for a dual frequency radio of a wireless node in accordance with one embodiment. The 2400 MHz (2.4GHz) radio has a larger bandwidth and shorter range compared to a 900 MHz radio of the node. In one example, the high priority data and normal priority data are both transmitted using the 2.4GHz radio if the 2.4GHz radio is available with a sufficient range for a transmission. If the 900 MHz radio is the only radio available with a sufficient range, then the high priority data is transmitted prior to the normal priority data or only high priority data is transmitted with the 900 MHz radio.

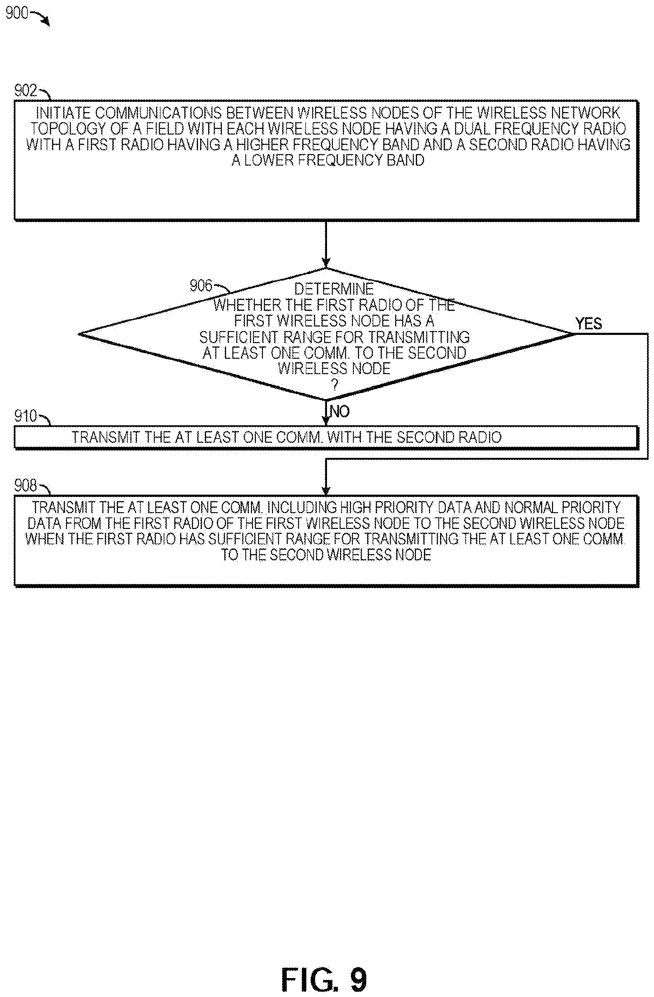

Figure 9 illustrates a flow diagram of one embodiment for a computer implemented method for operating wireless nodes of a wireless network topology. The wireless nodes can be part of a machine (e.g., agricultural vehicle, tractor, combine harvester, etc.), an implement, a stand alone node, or a cloud node. The method is performed by processing logic that may comprise hardware (circuitry, dedicated logic, etc.), software (such as is run on a general purpose computer system or a dedicated machine or a device), or a combination of both. In one embodiment, the method is performed by processing logic of a wireless node (e.g., node of a machine, cloud node, stand alone node, etc.), a device (e.g., monitor device, display device, user device, self-guided device, self-propelled device, etc.), or both the node and the device.

At operation 902, a computer implemented method 900 for a wireless network topology of a field comprises initiating communications between wireless nodes of the wireless network topology of the field with each wireless node having a dual frequency radio with a first radio having a higher frequency band and a second radio having a lower frequency band. At operation 906, the computer implemented method determines whether the first radio of the first wireless node has a sufficient range for transmitting at least one communication from the first wireless node to a second wireless node.

At operation 908, the computer implemented method transmits the at least one communication including high priority data and optionally normal priority data from the first radio of the first wireless node to the second wireless node when the first radio has a sufficient range for transmitting the at least one communication to the second wireless node.

In one example, the dual frequency radio comprises a 2.4 GHz radio and a 900 MHz radio. The first radio has a larger bandwidth and a shorter range compared to the second radio.

At operation 910, the computer implemented method transmits the at least one communication including high priority data and then normal priority data from the second radio of the first wireless node to the second wireless node when the first radio has an insufficient range for transmitting the at least one communication to the second wireless node. Alternatively, if no normal priority data is ready for transmission, then the computer implemented method can transmit the at least one communication including high priority data without normal priority data from the second radio of the first wireless node to the second wireless node when the first radio has an insufficient range for transmitting the at least one communication to the second wireless node.

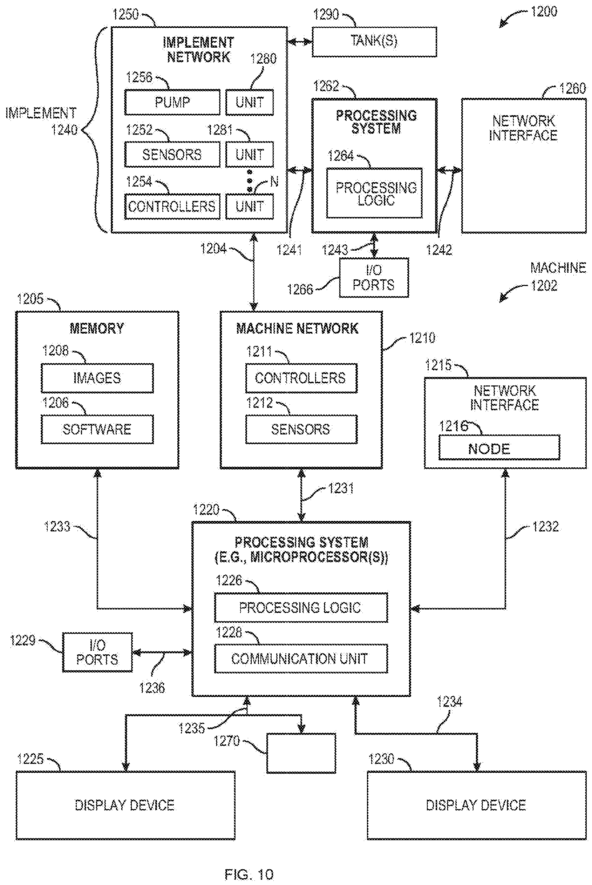

Figure 10 shows an example of a system 1200 that includes a machine 1202 (e.g., tractor, combine harvester, etc.) with a wireless node and an implement 1240 (e.g., planter, sidedress bar, cultivator, plough, sprayer, spreader, irrigation implement, etc.) in accordance with one embodiment. The machine 1202 includes a processing system 1220, memory 1205, machine network 1210 (e.g., a controller area network (CAN) serial bus protocol network, an ISOBUS network, etc.), and a network interface 1215 for communicating with other systems or devices including the implement 1240. A wireless node 1216 having a communication and lighting system can be integrated with the network interface 1215 or coupled to the network interface 1215. The machine network 1210 includes sensors 1212 (e.g., speed sensors, optical sensors), controllers 1211 (e.g., GPS receiver, radar unit) for controlling and monitoring operations of the machine or implement. The network interface 1215 can include at least one of a GPS transceiver, a WLAN transceiver (e.g., WiFi), an infrared transceiver, a Bluetooth transceiver, Ethernet, or other interfaces from communications with other devices and systems including the implement 1240. The network interface 1215 may be integrated with the machine network 1210 or separate from the machine network 1210 as illustrated in Figure 10. The I/O ports 1229 (e.g., diagnostic/on board diagnostic (OBD) port) enable communication with another data processing system or device (e.g., display devices, sensors, etc.).

In one example, the machine performs operations of a tractor that is coupled to an implement for planting applications and seed or particle sensing during an application. The planting data and seed/particle data for each row unit of the implement can be associated with locational data at time of application to have a better understanding of the planting and seed/particle characteristics for each row and region of a field. Data associated with the planting applications and seed/particle characteristics can be displayed on at least one of the display devices 1225 and 1230. The display devices can be integrated with other components (e.g., processing system 1220, memory 1205, etc.) to form the monitor.

The processing system 1220 may include one or more microprocessors, processors, a system on a chip (integrated circuit), or one or more microcontrollers. The processing system includes processing logic 1226 for executing software instructions of one or more programs and a communication unit 1228 (e.g., transmitter, transceiver) for transmitting and receiving communications from the machine via machine network 1210 or network interface 1215 or implement via implement network 1250 or network interface 1260. The communication unit 1228 may be integrated with the processing system or separate from the processing system. In one embodiment, the communication unit 1228 is in data communication with the machine network 1210 and implement network 1250 via a diagnostic/OBD port of the I/O ports 1229.

Processing logic 1226 including one or more processors or processing units may process the communications received from the communication unit 1228 or the node 1216 including agricultural data (e.g., GPS data, planting application data, soil characteristics, any data sensed from sensors of the implement 1240 and machine 1202, etc.). The system 1200 includes memory 1205 for storing data and programs for execution (software 1206) by the processing system. The memory 1205 can store, for example, software components such as planting application software or seed/particle software for analysis of seed/particle and planting applications for performing operations of the present disclosure, or any other software application or module, images (e.g., captured images of crops, seed, soil, furrow, soil clods, row units, etc.), alerts, maps, etc. The memory 1205 can be any known form of a machine readable non-transitory storage medium, such as semiconductor memory (e.g., flash; SRAM; DRAM; etc.) or non-volatile memory, such as hard disks or solid-state drive. The system can also include an audio input/output subsystem (not shown) which may include a microphone and a speaker for, for example, receiving and sending voice commands or for user authentication or authorization (e.g., biometrics).

The processing system 1220 communicates bi-directionally with memory 1205, machine network 1210, network interface 1215, display device 1230, display device 1225, and I/O ports 1229 via communication links 1231-1236, respectively. The processing system 1220 can be integrated with the memory 1205 or separate from the memory 1205.

Display devices 1225 and 1230 can provide visual user interfaces for a user or operator. The display devices may include display controllers. In one embodiment, the display device 1225 is a portable tablet device or computing device with a touchscreen that displays data (e.g., planting application data, captured images, localized view map layer, high definition field maps of different measured seed/particle data, as-planted or as-harvested data or other agricultural variables or parameters, yield maps, alerts, etc.) and data generated by an agricultural data analysis software application and receives input from the user or operator for an exploded view of a region of a field, monitoring and controlling field operations. The operations may include configuration of the machine or implement, reporting of data, control of the machine or implement including sensors and controllers, and storage of the data generated. The display device 1230 may be a display (e.g., display provided by an original equipment manufacturer (OEM)) that displays images and data for a localized view map layer, measured seed/particle data, as-applied fluid application data, as-planted or as-harvested data, yield data, seed germination data, seed environment data, controlling a machine (e.g., planter, tractor, combine, sprayer, etc.), steering the machine, and monitoring the machine or an implement (e.g., planter, combine, sprayer, etc.) that is connected to the machine with sensors and controllers located on the machine or implement.

A cab control module 1270 may include an additional control module for enabling or disabling certain components or devices of the machine or implement. For example, if the user or operator is not able to control the machine or implement using one or more of the display devices, then the cab control module may include switches to shut down or turn off components or devices of the machine or implement.

The implement 1240 (e.g., planter, cultivator, plough, sprayer, spreader, irrigation implement, etc.) includes an implement network 1250, a processing system 1262, a network interface 1260, and optional input/output ports 1266 for communicating with other systems or devices including the machine 1202. The implement network 1250 (e.g., a controller area network (CAN) serial bus protocol network, an ISOBUS network, etc.) includes a pump 1256 for pumping fluid from a storage tank(s) 1290 to application units 1280, 1281, ... N of the implement, sensors 1252 (e.g., radar, electroconductivity, electromagnetic, a force probe, speed sensors, seed/particle sensors for detecting passage of seed/particle, sensors for detecting characteristics of soil or a trench including a plurality of soil layers differing by density, a depth of a transition from a first soil layer to a second soil layer based on density of each layer, a magnitude of a density layer difference between soil layers, a rate of change of soil density across a depth of soil, soil density variability, soil surface roughness, residue mat thickness, a density at a soil layer, soil temperature, seed presence, seed spacing, percentage of seeds firmed, and soil residue presence, at least one optical sensor to sense at least one of soil organic matter, soil moisture, soil texture, and soil cation-exchange capacity (CEC), downforce sensors, actuator valves, moisture sensors or flow sensors for a combine, speed sensors for the machine, seed force sensors for a planter, fluid application sensors for a sprayer, or vacuum, lift, lower sensors for an implement, flow sensors, etc.), controllers 1254 (e.g., GPS receiver), and the processing system 1262 for controlling and monitoring operations of the implement. The pump controls and monitors the application of the fluid to crops or soil as applied by the implement. The fluid application can be applied at any stage of crop development including within a planting trench upon planting of seeds, adjacent to a planting trench in a separate trench, or in a region that is nearby to the planting region (e.g., between rows of corn or soybeans) having seeds or crop growth.

For example, the controllers may include processors in communication with a plurality of seed sensors. The processors are configured to process data (e.g., fluid application data, seed sensor data, soil data, furrow or trench data) and transmit processed data to the processing system 1262 or 1220. The controllers and sensors may be used for monitoring motors and drives on a planter including a variable rate drive system for changing plant populations. The controllers and sensors may also provide swath control to shut off individual rows or sections of the planter. The sensors and controllers may sense changes in an electric motor that controls each row of a planter individually. These sensors and controllers may sense seed delivery speeds in a seed tube for each row of a planter.

The network interface 1260 can be a GPS transceiver, a WLAN transceiver (e.g., WiFi), an infrared transceiver, a Bluetooth transceiver, Ethernet, or other interfaces from communications with other devices and systems including the machine 1202. The network interface 1260 may be integrated with the implement network 1250 or separate from the implement network 1250 as illustrated in Figure 12.

The processing system 1262 communicates bi-directionally with the implement network 1250, network interface 1260, and I/O ports 1266 via communication links 1241-1243, respectively.

The implement communicates with the machine via wired and possibly also wireless bi-directional communications 1204. The implement network 1250 may communicate directly with the machine network 1210 or via the network interfaces 1215 and 1260. The implement may also by physically coupled to the machine for agricultural operations (e.g., seed/particle sensing, planting, harvesting, spraying, etc.).

The memory 1205 may be a machine-accessible non-transitory medium on which is stored one or more sets of instructions (e.g., software 1206) embodying any one or more of the methodologies or functions described herein. The software 1206 may also reside, completely or at least partially, within the memory 1205 and/or within the processing system 1220 during execution thereof by the system 1200, the memory and the processing system also constituting machine-accessible storage media. The software 1206 may further be transmitted or received over a network via the network interface 1215.

In one embodiment, a machine-accessible non-transitory medium (e.g., memory 1205) contains executable computer program instructions which when executed by a data processing system cause the system to perform operations or methods of the present disclosure. While the machine-accessible non-transitory medium (e.g., memory 1205) is shown in an exemplary embodiment to be a single medium, the term "machine-accessible non-transitory medium" should be taken to include a single medium or multiple media (e.g., a centralized or distributed database, and/or associated caches and servers) that store the one or more sets of instructions. The term "machine-accessible non-transitory medium" shall also be taken to include any medium that is capable of storing, encoding or carrying a set of instructions for execution by the machine and that cause the machine to perform any one or more of the methodologies of the present disclosure. The term "machine-accessible non-transitory medium" shall accordingly be taken to include, but not be limited to, solid-state memories, optical and magnetic media, and carrier wave signals.

It is to be understood that the above description is intended to be illustrative, and not restrictive. Many other embodiments will be apparent to those of skill in the art upon reading and understanding the above description. The scope of the disclosure should, therefore, be determined with reference to the appended claims.

## Claims

1. A machine (400, 500) for agricultural operations, comprising:
a cab (410, 510) for an operator of the machine (400, 500); and
a communication and lighting system (420, 520) positioned in an elevated position above the cab (410, 510), wherein the communication and lighting system (420, 520) includes antenna elements (290, 280, 270) and a RF circuitry (260) to transmit and receive communications;
wherein the communication and lighting system (420, 520) comprises lighting circuitry (250) to emit light in a rotating pattern to indicate a warning condition and a communication state; and
wherein the RF circuitry (260) comprises a dual frequency radio having a first frequency and a second frequency to transmit and receive communications at multiple frequency bands, wherein the first frequency has a larger bandwidth and a shorter range compared to the second frequency, wherein the RF circuity (260) is configured to transmit high priority data and normal priority data using the first frequency when a sufficient range for transmission is available for the first frequency, and wherein the RF circuitry (260) is configured to transmit the high priority data prior to the normal data or only high priority data when the sufficient range for transmission is only available for the second frequency;
wherein high priority data is data affecting the way other machines or vehicles perform their product application.

## Patentansprüche

1. Maschine (400, 500) für landwirtschaftliche Arbeiten, umfassend:
eine Kabine (410, 510) für einen Benutzer der Maschine (400, 500); und
ein Kommunikations- und Beleuchtungssystem (420, 520), das in einer erhöhten Position über der Kabine (410, 510) angebracht ist, wobei das Kommunikations- und Beleuchtungssystem (420, 520) Antennenelemente (290, 280, 270) und eine HF-Schaltung (260) zum Senden und Empfangen von Kommunikationen beinhaltet;
wobei das Kommunikations- und Beleuchtungssystem (420, 520) eine Beleuchtungsschaltung (250) zum Abstrahlen von Licht in einem Rotationsmuster umfasst, um eine Warnbedingung und einen Kommunikationszustand anzuzeigen; und
wobei die HF-Schaltung (260) einen Doppelfrequenzfunk umfasst, der eine erste Frequenz und eine zweite Frequenz zum Senden und Empfangen von Kommunikationen auf mehreren Frequenzbändern aufweist, wobei die erste Frequenz eine größere Bandbreite und einen kürzeren Bereich im Vergleich zur zweiten Frequenz aufweist, wobei die HF-Schaltung (260) konfiguriert ist zum Senden von Daten mit hoher Priorität und Daten mit normaler Priorität unter Verwendung der ersten Frequenz, wenn für die erste Frequenz ein ausreichender Bereich für das Senden zur Verfügung steht, und wobei die HF-Schaltung (260) konfiguriert ist zum Senden der Daten mit hoher Priorität vor den normalen Daten oder nur der Daten mit hoher Priorität, wenn der ausreichende Bereich zum Senden nur für die zweite Frequenz zur Verfügung steht;
wobei die Daten mit hoher Priorität Daten sind, welche die Weise, in der andere Maschinen oder Fahrzeuge ihren Produkteinsatz durchführen, beeinträchtigen.

## Revendications

1. Machine (400, 500) pour l'exécution d'opérations agricoles, comprenant :
une cabine (410, 510) pour un opérateur de la machine (400, 500) ; et
un système de communication et d'éclairage (420, 520) positionné à une position élevée au-dessus de la cabine (410, 510), le système de communication et d'éclairage (420, 520) incluant des éléments d'antenne (290, 280, 270) et un circuit RF (260) pour transmettre et recevoir des communications ;
le système de communication et d'éclairage (420, 520) comprenant un circuit d'éclairage (250) pour émettre de la lumière selon un motif rotatif pour indiquer une condition d'alerte et un état de communication ; et
le circuit RF (260) comprenant une radio à double fréquence ayant une première fréquence et une deuxième fréquence pour transmettre et recevoir des communications sur plusieurs bandes de fréquences, la première fréquence ayant une bande passante plus large et une portée plus courte que la deuxième fréquence, le circuit RF (260) étant configuré pour transmettre des données à haute priorité et des données à priorité normale en utilisant la première fréquence lorsqu'une portée suffisante pour la transmission est disponible pour la première fréquence, et le circuit RF (260) étant configuré pour transmettre les données à haute priorité avant les données normales ou uniquement les données à haute priorité lorsque la portée suffisante pour la transmission n'est disponible que pour la deuxième fréquence ;
les données à haute priorité étant des données affectant la manière dont d'autres machines ou véhicules exécutent leur application de produit.
